# EUROPEAN PATENT APPLICATION

(11) **EP 1 615 027 A1**
(43) Date of publication of application: **11.01.2006**
(21) Application number: 04103284.8
(22) Date of filing: 09.07.2004
(51) Int. Cl.: G01N 29/06, G01N 29/00, G01N 29/26, G01N 21/62, G01N 21/84, G02B 21/00

(54) **Method and apparatus for imaging overlapping fields with a combined ultrasonic wave and multi-photon installation**

(71) Applicant: Institut Curie, 75248 Paris Cedex 05 (FR); CENTRE NATIONAL DE LA RECHERCHE SCIENTIFIQUE (CNRS), 75794 Paris Cedex 16 (FR)
(72) Inventor: Amblard, François, 75005 Paris (FR); Gueudry, Charles, 75007 Paris (FR); Fetler, Luc, 75014 Paris (FR)
(74) Representative: Kohn, Philippe

(57) **Abstract**

The present invention concerns a method and an apparatus for imaging overlapping fields with ultrasonic waves and multi-photon installation. It relates to the technical field of imaging various parts in the fields of living tissues, samples and materials, and others. In a first step (42 - 46), a representation of a first signal generated with an ultrasound wave generator is produced under a first resolution in a first region of said material under test. In a second step (48 - 52), a representation of a second signal generated with a multi-photon imaging head is produced under a second resolution, second resolution being higher than said first resolution, in a second region of said material, second region being included in the said first region.

## Description

The present invention concerns a method and an apparatus for imaging overlapping fields with ultrasonic waves and multi-photon installation. It relates to the technical field of imaging various parts in the fields of living tissues, samples and materials, and others.

In the state of the art, it is well known to produce images by producing an ultrasound wave beam. An example of such a technique is described in Amena et al. as published in FR-A-2.773.459, on 02/11/2000.

In this document, it is described a method and an apparatus in which a probe is radiating a predetermined modulated field of ultrasound waves. The probe is carried by a robotic arm, the head of which is controlled both in position and direction by means of a computer. The ultrasound probe is electrically connected to a modulating-demodulating circuit controlled by the computer to generate an ultrasound wave beam and then, to detect reflected signals from the scanned material.

Therefore, a representation signal is sampled to build a representation of the scanned field by the way of coordinates addressed tables. Said tables are periodically registered in memories under the control of the computer. Memories of the computer are processed under programs which are devised to ensure a bidimensional representation of the material structures of the scanned tissues or samples. In the cited document, representations of images are based both on analysis of the reflected signals from the ultrasound probe and of detected signals from positions and orientation of each part of the robotic arm.

In the following, the word "resolution" is dedicated to specify the largest size of the unresolved point or volume element which is radiating a signal that the probe is able to detect and/or localize in the placing and orienting scheme. In other words, it refers to the minimal distance below or under which two points can not be separated by the signals that they emit. Therefore, it involves various phenomena as physics of scattering and or electronic resolution of small electronic detection signals after electronic conversion.

To enhance the resolution of an ultrasound imaging, it is known to increase the frequency of the ultrasound waves and others measures as it is reported in the above cited document. However, such a measure is limited due to some physics aspects of scattering of the exposed material and also due to some difficulties to generate and propagate efficient high energy ultrasound waves at very high frequency under 100 MHz.

An object of the present invention is to provide a solution to the above problem by combining ultrasound imaging with higher resolution imaging techniques.

In an other field, as described in WO-A-02/40974, filed in the name of Amblard et al., it is described a multi-photon imaging installation which is able to produce a representation of a signal from a zone under a resolution which is higher than the resolution of the above cited technique in ultrasound scanning.

In this document, it is described a method in which a laser beam, modulated in ultra short pulses, is directed in a zone of scanning of a material, preferably but not essentially of living tissues and structures thereof (as intrinsic chromophores even not treated by any peculiar agent) which is radiating a spectral response which is detected with convenient detectors.

However, although such a method is clearly more precise to generate high resolution images, with a micron resolution, and also physical characterizations of matters which scatters light of fluorescences, it has a drawback due to the difficulty to precisely investigate a specified locus due to limited image size compared to the size of regions to be explored.

An object of the present invention is to provide a solution to the above problem.

Therefore, the present invention is directed to a method for imaging a material under test. The method is characterized in that :
- in a first step, a first representation of a first signal generated with an ultrasound wave generator is produced under a first resolution in a first region of said material under test ;
- in a second step, a second representation of a second signal generated with a multi-photon imaging head is produced under a second resolution, said second resolution being higher than said first resolution, in a second region of said material, said second region being at least partially included, or intersecting, in the said first region.

A device is also provided according to the present invention. It comprises at least:
- a first probe which is able to generate a representation of a multidimensional signal, like a two dimensional (2D) or three dimensional (3D) geometric signal, on the basis of an ultrasound wave associated with a material under test under a first resolution in a first region;
- a second probe which is able to generate, on a multi-photon imaging basis, a representation of a signal emitted by the same material under test at a second resolution which is higher than said first resolution within a second region included, or intersected, in said first region ;

and means for adapting said second probe to generate said representation of a second resolution on the basis of at least said representation of a first resolution.

Other characteristics and advantages of the present invention will more clearly appear on the basis of the following detailed specification and of the accompanying drawings in which :
- figure 1 is a set of four diagrams of first and second representations used under the present invention ;
- figure 2 is a diagram illustrating a device incorporating the present invention ;
- figure 3 is a diagram illustrating a mode of a method carrying the present invention ;
- figure 4 is a diagram of a hybrid probe usable in a device embodying the present invention ;
- figure 5 is a set of three representations of various signals used in the present invention ;
- figure 6 is a diagram representing an other device embodying the present invention ;
- figures 7 and 8 are two schematic views of two kinds of probes well-suited for the invention.

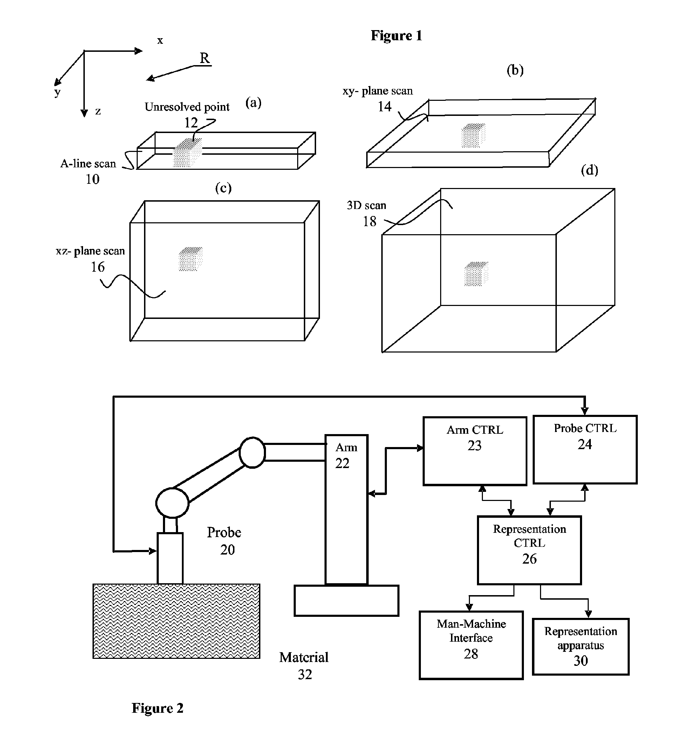

At figure1 is represented a set of diagrams relative to the field of ultrasound beam imaging. At diagram (a) is represented a mono direction or dimension 1D - representation as it is known in the A-scan technique for acquiring signals in ultrasound imaging.

At diagram (b), it is represented a xy - plan scan in which matter is irradiated and then scattering detected with an ultrasound beam emitted by a probe. Such a probe is mechanically controlled or electronically activated in a phased-array, each element being in turn first emitter and then receiver of the ultrasound field as an echo tester.

At diagram (c), it is represented an other two directions or dimensions 2D representation of a signal based on an ultrasound beam which is radiated initially in the xz-plane relative to xyz - coordinates R.

At diagram (d), it is represented an other three directions or dimensions 3D representation of a signal generated on the basis of an ultrasound beam. The material under test is represented on the basis of a three-dimensional distribution of matter. It is known to manage such a representation under a 2D display, by plane projections or under perspective coding, but also with immersion techniques with enhanced reality.

Each point or elementary volume of the geometric space in which the material under test is lying is determined on the basis of the resolution. For example, the least volume element 12 is specific both to physical specifications and electronic characteristics of the encoding of the detected radiation like acoustic vibration when material has been first irradiated by convenient ultrasonic waves beam. Such a point is a geometric specification of meshing of the space in which the material under test is lying and the parameter which allows enabling a representation of a signal like material density.

At figure 2, it is represented a diagram of an apparatus in which the present invention is embodied. A probe 20 is mounted at the head of a robotic arm 22 to precisely localize or locate a reference point and a reference axis of the signal which will be generated on the basis of the probe 20.

Electronic signals, or others as it will be described hereinafter, are generated by a probe controller 24 which is adapted both for stimulating material 32 under test and then detecting a signal of detection.

Detection signals are processed then on the basis of the reference position and of the reference orientation of the probe 20 fixed by a arm controller 23. Such references are settled by manual or servo-assisted displacements of head of the arm 22 on which probe 20 is mounted and such displacements of the various parts of the arm, as it is well known in the art, are detected and ascribed in memories to prepare local distributions of signals to generate convenient representations of various detected signals. More peculiarly, such a representation is produced on a display like an image.

According to an other embodiment, the arm 20 is moved under control of the arm controller 23 with various motors and other movers (or actuators) activating parts of the arm to localize precisely the probe 20 on the material 32 under test.

More peculiarly, such a mount is able to lead the probe 20 on a precise localization point on the material as it is designated by a user on a representation apparatus 30 like a display, a Man-Machine Interface (MMI) 28 is provided to allow users to select such a localization point on the basis of previous representations of the detected signals. Precisely, such a method is used when a user has detected a predetermined structure at a point on the material under previous representations stored in a convenient mass storage coupled to the representation controller 26.

In such an embodiment, a user is able to produce a first representation using ultrasound waves beam at a first resolution. For example, he is acquiring a plane zone of 10 mm wide and 1 mm deep from the surface of the material, or down at some depth of the surface.

As it has been described in WO-A-02/40974, depth of the imaged field is controlled with power of an ultra short pulse or of a very short pulse laser source.

Displaying the representation of the local densities of the material 32, on the representation apparatus 30, he supposes a region of interest at a point of the displayed zone at the said first resolution. Activating a convenient item on a menu of the Man Machine Interface MMI 28, he controls the robotic arm 22 by means of the arm controller 24 to place the probe 20 on the specified point on the surface of the material 32 under test.

Then, a signal is activating a second part of the probe 20 to generate a multi-photon image which is included in the field of the ultrasound image previously acquired.

Therefore, a second representation at a second resolution, which is higher than ultrasound wave beam, is generated, displayed on the representation apparatus 30 and recorded (memorized) in relation both with the precise localization of the probe and the first representation at a second zone included in the first region.

As it has been described in WO-A02/40974, a third representation is also provided by the means of the multi-photon installation. Due to some physical phenomena and the spectral optical diversity of the Non Linear Response of the matter under test, it is also provided a means for spectrally resolving image and for qualifying the matter which is located at a point of the second representation.

Therefore, by addressing a table recorded in the representation controller 26, it is possible, after a short time of analysis, to indicate the present components as molecules.

An advantage of the present invention is also to provide a chemical analysis of the species disposed at some points of the second representation without the need of cutting a part or sample of the material and of send it to a chemical analyzer.

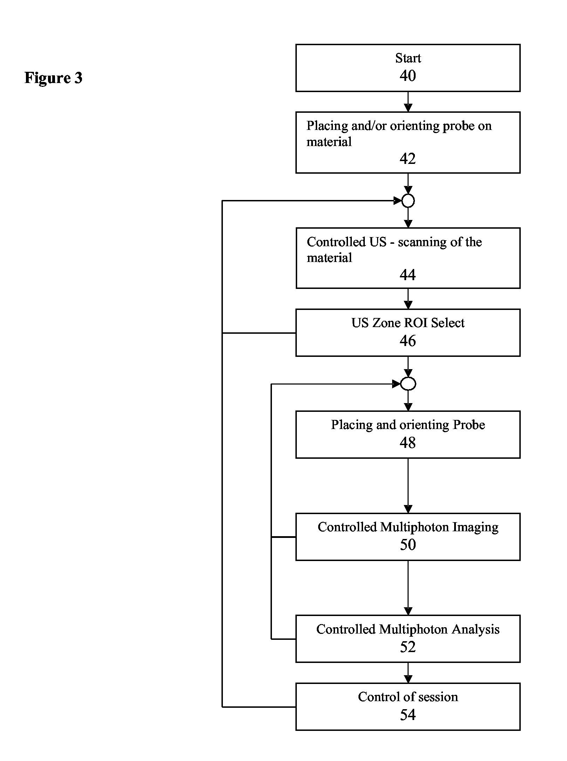

In connection with figure 3, it is described a method for using the apparatus as described in connection with figure 2.

After that a start step 40 has been performed, a step 42 for placing and/or orienting a probe on the material under test is performed. Selection of them is an operation which is made by the user. It initiates a control loop which is controlled at step 54 when a session is ended. During the first control loop, a step 44 to perform a scan of the material by means of an ultrasonic probe is achieved. At the end thereof, a first representation of the distribution of densities in the material is displayed or otherwise processed. The user is provided with a means for selecting a Region of interest during a step 46.

A second control loop is also settled at this point of the method for placing and orienting the probe carrying the multi-photon imaging installation with a step 48. Such a step is analogous to step 42.

According to one mode of operation, an automated movement is processed by the arm controller 23 to place and orient the probe at a convenient location on the material surface 32. To realize this movement, the robotic arm is provided with actuators as it is well known.

According to an other mode of operation, the robotic arm is manually displaced. However, as it is known in the art, the joints or articulations of the robotic arm are provided with actuators to limit possible movements of the arm to help the user to precisely place and orient the probe as it is processed.

After placing and orienting the probe, a step 50 for controlling the multi-photon imaging installation is performed so that a second representation at a second zone included in a selected region of interest of the first zone at a first resolution is acquired, and displayed or otherwise processed. The second representation is build under a second resolution higher than first resolution as described here above.

As an alternate possibility, step 50 form imaging at a second resolution can be achieved in a step 52 under the stand of a species analysis at a selected point as it has been described in WO-A-02/40974. The second control loop is ended if user has achieved both the second representation with imaging and/or a third representation on the basis of that controlled multi-photon analysis.

In an embodiment, a selection of a region of interest on the display on which one of the three representations is lying, is followed by a step of producing an optical marker to help the user to remove the head while optically pointing at the region of interest as marked in the step 46. Such an optical marker could be used to perform any convenient operation like cutting or sampling a selected part of the material under test at the region of interest.

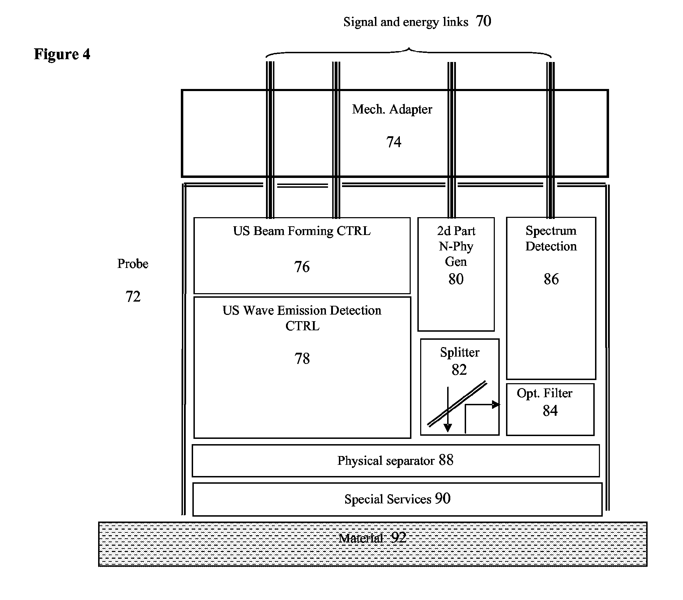

At figure 4, it is represented a hybrid probe in which first and second parts are provided to ensure ultrasound analysis and also multi-photon imaging and/or analysis. Such a probe is provided at the head of a robotic arm as it is shown at figure 2.

According to an other embodiment, probe is mounted freely at the end of a cable which leads signals and other flux to drive the two parts of the probe. To ensure precisely the localization of the probe in relation with a geometric reference, it is provided a detector which performs a triangulation process to detect spatial position and orientation of the probe. The detected position and orientation are processed in a computer in the same manner as the arm controller 24 at figure 2.

In the described embodiment, the probe is enclosed in a housing or carter 72 and is linked to a base station by means of signal and energy links 70 as it is described. A mechanical adapter 74 is provided on the housing 72 to precisely adapt the probe on the head of any convenient robotic arm (not shown at figure 4).

A first part of the probe comprises an ultrasonic probe which is able to generate a first representation of a signal like densities of the material under test. It includes :
- an ultrasound beam forming device 76 ;
- an ultrasound wave detection device 78.

A second part of the probe is occupied by a multi-photon imaging installation which includes :
- a multi-photon generator 80 ;
- a spectrum detection device 86 which is able to perform two functioning modes :
   -- a first imaging mode under a second resolution which is higher than first resolution of the ultrasound wave beam of the said first part of the problem ;
   -- a second analysis mode which is designed to provide a species analysis of the matter at any point of the material under test;

both modes being based on the Non Linear Optical NLO response induced by femtosecond laser generated first and which is traversing in the reverse direction a beam splitter 84, second.

First part 76-78 of the probe 72 is linked to a controller of the said first representation to provide convenient signals and energy to activate active elements like piezoelectric elements in phased-array antenna or in a multi-head mechanical probe. Both are adapted to form ultrasonic build in a first region at the said first resolution.

The said second part 80 - 86 of the probe 72 is built in two separate elements. A first element (not represented) of the multi-photon imaging installation is designed outside of the probe 72 with a controlled stimulated light source, like a femtosecond modulated laser. Control of the said first element is carried out with power, spectral distribution, wave length and phase position of pulses, to adapt mainly the depth of the tested zone in the material 92 under the said second resolution representation or also in the third representation.

The first element of the said second part of the probe 72 is connected by means of an optical fiber or by means of an optical guide such as an energy link 70, to a second element of the said second part of the probe 72 which is coping with the tip of the optical fiber or guide and a beam splitter 82 to traverse towards the material under test.

To produce convenient scanning of the material under test 92, the said second element of the multi-photon imaging installation used as the second part of the probe 72 is provided with a scanner adapted to scan, under two orthogonal directions, at least one ray of stimulated light generated by the said first element of the multi-photon imaging installation. Convenient galvanometric mirrors, orthogonally oriented are well suited as it has been described in WO-A-02/40974.

After stimulation, photons radiated by the material under test 92 are reversed in the beam splitter 82, traverse an optical filter and are collected with a photo detector 86.

In one embodiment, said second element 80 - 86 of the probe 72 is comprising a photomultiplier or photo detector at the output of the beam splitter 82 and an adapter amplifier to transmit detected signals towards the second representation controller (not shown at figure 4, but analogous to the representation of controller 26 at figure 2) a signal of a second (imaging) and/or of a third (species analysis) kinds.

The first and second parts of the probe are coupled to the material under test 92 with a physical separator 88 so that energies passing through the separator are only those desired in the said test.

According to one embodiment, a special service unit 90 is provided to prepare the surface of the material under test 92 like a low pressure chamber and/or an acoustical fluid dispenser to enhance coupling between the material and the first part 76-78 of the probe 72 and which is optically well-suited for the photons exchanged with the said second part 80-86 of the probe 72.

According to an other embodiment, the probe 72 is also provided with an optical marker which is controlled with one of the signal and energy links 70. Optical marker is activated under the control of the representation controller (see 26 at figure 2) when a region of interest is selected at step 46 under the diagram at figure 3. According to a preferred embodiment, optical marker is a mode of functioning of the second part of the probe. It has been found by the inventors that n-photon imaging installation as described in WO-A-02/40974 is able to perform illumination in visible range, if the used laser is controlled under a convenient scheme.

According to an other embodiment, such an optical marker is made with a separate visible laser which is also located in the said first element of the multi-photon imaging installation and linked to the second part by means of any convenient means such as optical fiber or optical guide, and is oriented with the scanner provided for generation of the multi-photon imaging and traversing the said beam splitter 82.

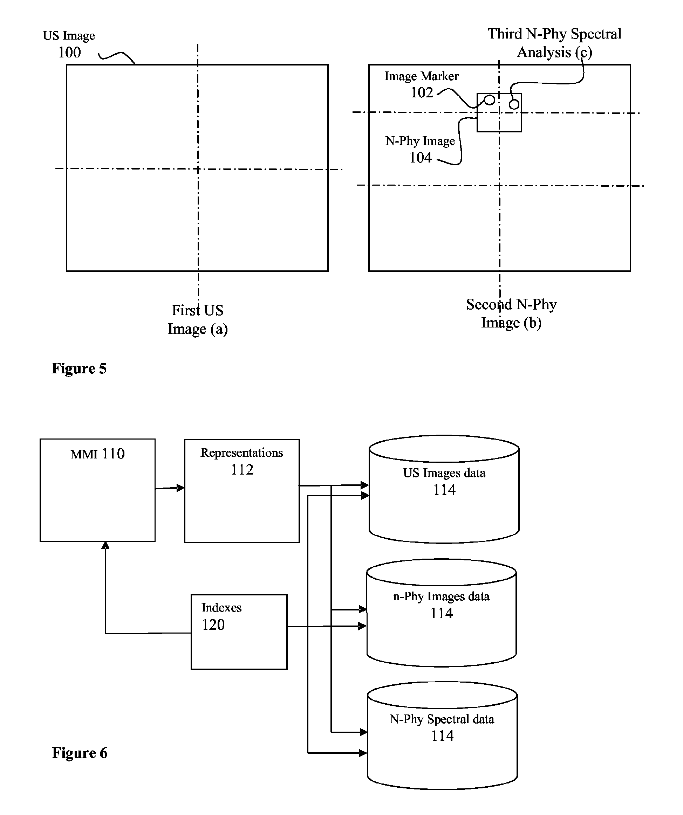

At figure 5, it is described two successive images that are acquired with an embodiment of the present invention.

First, as it is described above, an ultrasound image 100 is acquired on a representation apparatus (see 30 at figure 2). At step 46 (see figure 3) a Region Of Interest ROI is selected by the user.

Manually, or in a motorized procedure, it is possible to lead the probe 72 (figure 4) to the vicinity of the selected point marked by the optical marker, so that an multi-photon N-Phi Image 104 is acquired by enabling the second part of the probe. Multi-photon imaging installation of the said second part of the probe is used in its imaging mode.

After second representation 104 has been acquired, displayed and/or otherwise processed, the user acts on the Man Machine Interface (see 28, figure 2) to enable the multi-photon imaging installation of the second part of the probe in its second mode of species analysis at a third N-Phi Spectral analysis (see (c) at figure 5, under the scope of the Second N-Phi Image (b)).

If any, an optical marker is produced as the probe has been retracted from the material under test (see 92 at figure 4) to allow subsequent processing of a selected zone 102 on the material under test.

At figure 6, according to an other embodiment of the present invention, a computer in which a part of the apparatus is represented. A Man Machine Interface MMI 110 is provided to allow users to use the various features of the invention. Mainly, the MM1 110 is programmed to run the method as it is specified in the diagram at figure 3. The results of the actions at the MMI 110 are processed with a representation module 112, the output of which being coupled to several databases in which :
- 114 is an ultrasound image(s) database, of the first resolution images ;
- 116 is an N-Phi image(s) database of the second resolution images;
- 118 is an N-Phi Spectral analysis database of the species characterization.

The tables of the three databases are indexed under an Index table 120 which collects indexation data such as :
- identifier of the material under test ;
- localization and orientation of the probe for each data in the three databases.

With an application to manage the three databases, it is possible to navigate in the various images and analysis at different resolutions to prepare others analysis or imaging.

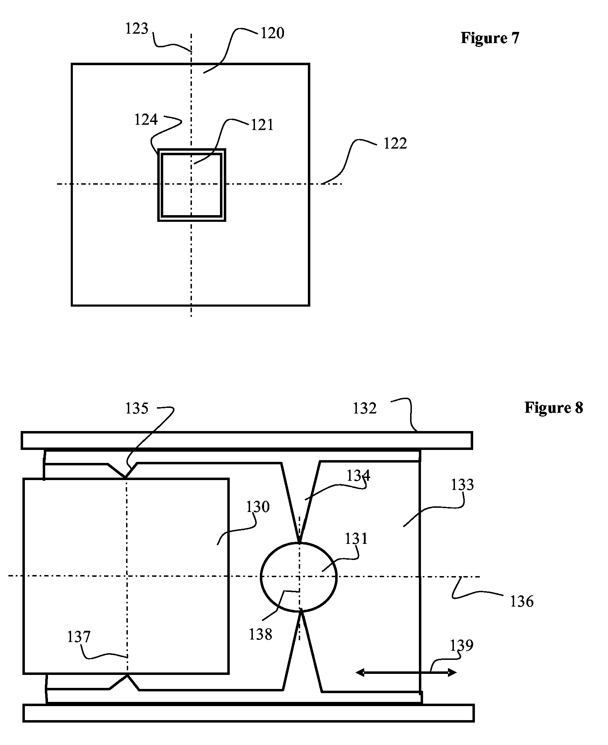

At figure 7, it is represented a first type of probe well-suited for the invention. Such a probe is able to produce at the same time two representations at a first and a second resolution of two zones having the same central reference point or other common reference point.

The first part of the probe is a phased-array ultrasound probe 120, the center of which has been cut as a centered window 124.

At the location of the window 124 is located the optical lens 121 of the second part of the probe which is devoted to the multi-photon imaging installation. In such a location, the two representations have the same vertical axis 123 and horizontal axis 122.

According to an other embodiment, the window 124 is partially located at the center of the ultrasound part 120. It is possible to design a probe the window 124 is arriving at one edge of the ultrasound part 120 of the probe so that the two centers of the first and second representations are not the same.

According to an other embodiment, the first part of the probe is built with a plurality of ultrasound probes so that the ultrasound representation is composed on the basis of accumulation of a plurality of ultrasound image detections and also the second part 121 of the invented probe which is responsible to the second representation with a multi-photon imaging installation is at least partially enclosed by the said plurality of ultrasound probes.

At figure 7, the probe is a static one in that meaning that both first and second parts of the probe are not movable one with the other.

Conversely, at figure 8, it has been shown an embodiment in which both first and second parts of the invented probe are movable relatively to a static part of the probe so that it is possible to place one after the other each part or the probe at a predetermined location on the field under test.

At figure 8, the first ultrasound imaging part 130 and the second multi-photon imaging part 131 are mounted on a carriage 133 with convenient fixtures 135 and 134, respectively. The carriage is actuated by means of a convenient actuator (not shown) in a static guide 132 fixed upon the housing (not shown) of the invented probe so that both the first and second parts 130 and 131 are back and forth movable (arrow 139).

As a first representation is acquired, the carriage 133 is moved to a marked position so that the axis 137 of the first part 130 of the probe is translated along axis 136 to the aimed point in the field under test. After it has been acquired, if second and/or third representations are ordered by the user, the carriage 133 is moved along the axis 136 so that the central axis 138 of the second part of the probe is located to the desired point of view for that second or third representation (see step 48, figure 3).

## Claims

1. A method for imaging a material under test, **characterized in that** :
- in a first step, a representation of a first signal generated with an ultrasound wave generator is produced under a first resolution in a first region of said material under test ;
- in a second step, a representation of a second signal generated with a multi-photon imaging head is produced under a second resolution, said second resolution being higher than said first resolution, in a second region of said material, second region being at least partially included, or intersecting, in the said first region.

2. A method according to claim 1, **characterized in that** the first step comprises the step of selecting a region of interest (ROI) in any of the first, or second representations.

3. A method according to claim 1, **characterized in that** the second step comprises a step of acquiring a signal of species analysis.

4. A method according to anyone of claims 1 to 3, **characterized in that** a localization and/or an orientation of imaging and/or an analyzes is performed.

5. A method according to anyone of claims 1 to 4, **characterized in that** at least one step of generating a marker, such as an optical marker, is performed after that one of the said representations has been achieved.

6. A method according to claim 5, **characterized in that** said step of generating a marker is performed by setting a multi-photon imaging installation in a visible illumination mode.

7. A device for imaging a material under test, **characterized in that** it comprises at least :
- a first probe which is able to generate a representation of a multidimensional signal on the basis of an ultrasound wave associated with a material under test under a first resolution in a first region ;
- a second probe which is able to generate on a multi-photon imaging basis, a representation of a signal emitted by the same material under test at a second resolution higher than said first resolution within a second region included, or intersected, in said first region ;
and means for adapting said second probe to generate said representation of a second resolution on the basis of at least said representation of a first resolution.

8. A device according to claim 7, **characterized in that** a means for precisely localizing and/or orienting the probes is provided.

9. A device according to claim 8, **characterized in that** at least one probe (20) is mounted at the head of a robotic arm (22) to precisely localize a reference point and a reference orientation of the signal which will be generated with the probe (20).

10. A device according claim 9, **characterized in that** detection signals are processed on the basis of the reference position and of the reference orientation of the probe (20) fixed by an arm controller (23).

11. A device according to claim 10, **characterized in that** references are settled by manual and/or servo-assisted displacements of head of the arm (22) on which a probe (20) is mounted and **in that** such displacements of the various parts of the arm are detected and ascribed in memories to prepare local distributions of signals to generate convenient representations of various detected signals.

12. A device according claim 10, **characterized in that** arm (20) is moved under control of the arm controller (23) with various motors and others movers activating parts of the arm to precisely localize the probe (20) on the material (32) under test.

13. A device according to anyone of claims 8 to 12, **characterized in that** a precise localization point on the material as it is designated by a user on a representation apparatus (30) and a Man-Machine Interface MMI (28) is provided to allow users to select such a localization point on the basis of older representations of the detected signals.

14. A device according to anyone of claims 7 to 13, **characterized in that** a representation controller (26) is provided to control at least a representation of a signal under a first resolution on the basis of a ultrasound wave probe in a first region, a representation of an other signal under a second resolution, higher than said first resolution, on the basis of a multi-photon imaging installation, and a representation of a species analysis on the basis of the said multi-photon imaging installation.

15. A device according to anyone of claims 7 to 14, **characterized in that** an optical marker is provided in relation with the probe, the activation thereof being controlled on the basis of the said first, second and/or third representation.

16. A device according to anyone of claims 7 to 15, **characterized in that** a hybrid probe is provided in which first and second parts are provided to ensure ultrasound analysis and multi-photon imaging and/or analysis.

17. A device according to claim 16, **characterized in that** a mechanical adapter (74) is provided on a housing (72) with a mechanical adapter (74) to precisely adapt the probe on the head of a robotic arm.

18. A device according to claim 16, **characterized in that** it comprises a physical separator (88) so that energies passing through the separator are only those desired in the said test.

19. A device according to claim 16, **characterized in that** a special service unit (90) is provided to prepare the surface of the material under test (92) such as a low pressure chamber and/or an acoustical fluid dispenser.

20. A device according to anyone of claims 7 to 19, **characterized in that** a Man Machine Interface MMI (110) is provided to allow users to use any one of three modes ultrasound imaging at a first resolution, multi-photon imaging at a second resolution and multi-photon species analysis which is coupled to a representation module (112) the output of it being coupled to several databases comprising :
- an ultrasound image database (114), of the first resolution images ;
- a multi-photon N-Phi images database (116) of the second resolution images ;
- a multi-photon N-Phi Spectral analysis database (118) of the species characterization.

21. A device according to claim 20, **characterized in that** an Index Table (120) which collects indexation data such as :
- identifier of the material under test ;
- localization and orientation of the probe for each data in the three databases,
is provided to manage the said three databases, to navigate in the various images and analysis at different resolutions to prepare other analysis or imaging.

22. A device according to anyone of claims 7 to 21, **characterized in that** the second probe (121) to acquire a representation of a second resolution with a multi-photon imaging installation is located in a window (124) arranges in the first probe (120) to acquire a representation of a first resolution with ultrasound waves.

23. A device according to anyone of claims 7 to 22, **characterized in that** first (130) and second (131) probes are movable on a carriage (133) in a fixed guide (132) to ensure precise location and/or orientation of both the first and second probes at the time of acquiring first, second and/or third representations.
